# EUROPEAN PATENT APPLICATION

(11) **EP 4 800 444 A1**
(43) Date of publication of application: **02.09.2026**
(21) Application number: 24881385.9
(22) Date of filing: 30.09.2024
(51) Int. Cl.: G02B 5/18, G02B 6/00, G02B 27/01

(54) **GRATING ASSEMBLY, OPTICAL WAVEGUIDE ASSEMBLY AND AUGMENTED REALITY DISPLAY DEVICE**

(30) Priority: 24.10.2023 CN 202311385535
(71) Applicant: Beijing Zitiao Network Technology Co., Ltd., Beijing 100190 (CN); Lemon Inc., Grand Cayman, KY1-1205 (KY)
(72) Inventor: XIONG, Wen, Beijing 100028 (CN); ZHANG, Peng, Los Angeles, California 90066 (US); TANG, Hao, Beijing 100028 (CN)
(74) Representative: Grünecker Patent- und Rechtsanwälte PartG mbB
(86) International application number: PCT/CN2024/123081
(87) International publication number: WO 2025/087019

(57) **Abstract**

The present disclosure provides a grating assembly, an optical waveguide assembly, and an augmented reality display apparatus. The grating assembly includes an input coupling grating and an output coupling grating that are located on a same surface of a substrate and arranged at an interval. A duty cycle of the output coupling grating gradually decreases in a direction away from the input coupling grating. In this way, in the direction away from the input coupling grating, as the duty cycle gradually decreases, the coupling-out of light by the output coupling grating is gradually enhanced, which may prevent the light from being prematurely coupled out in an area close to the input coupling grating. The output coupling grating has a relatively small duty cycle in an area away from the input coupling grating and thus has relatively high coupling-out efficiency. Therefore, the foregoing arrangement of the output coupling grating may improve the uniformity of light coupling-out efficiency of the output coupling grating in different areas, thereby improving the homogeneity of display color.

## Description

The present application claims priority to Chinese Patent Application No. 202311385535.0, filed on October 24, 2023 and entitled "GRATING ASSEMBLY, OPTICAL WAVEGUIDE ASSEMBLY, AND AUGMENTED REALITY DISPLAY APPARATUS", which is incorporated herein by reference in its entirety.

### TECHNICAL FIELD

The present disclosure relates to the technical field of gratings, and in particular, to a grating assembly, an optical waveguide assembly, and an augmented reality display apparatus.

### BACKGROUND

An optical waveguide is a key technology for AR display. Its basic principle is that light emitted by an optical engine is coupled into the optical waveguide through a grating. When the light propagates in the waveguide, no loss of light energy is ensured by total reflection, until the light is coupled out through the grating at a human eye position. In addition, because the position of the human eye varies with people and time during use, we need to perform an eye pupil expansion (EPE) on the light beam. By allowing the light to be reflected multiple times on a grating surface and coupled out multiple times, the human eye may receive the light emitted by the optical engine within a certain range (eye box, EB). However, light intensity distribution of light coupled out of a current grating structure is extremely uneven, which seriously affects the visual experience of a user.

### SUMMARY

In an aspect of the present disclosure, the present disclosure provides a grating assembly. The grating assembly includes an input coupling grating and an output coupling grating that are located on a same surface of a substrate and arranged at an interval. According to an embodiment of the present disclosure, a duty cycle of the output coupling grating gradually decreases in a direction away from the input coupling grating. In this way, in the direction away from the input coupling grating, as the duty cycle gradually decreases, the coupling-out of light by the output coupling grating is gradually enhanced, which may prevent the light from being prematurely coupled out in an area close to the input coupling grating. The output coupling grating has a relatively small duty cycle in an area away from the input coupling grating and thus has relatively high coupling-out efficiency. Therefore, the foregoing arrangement of the output coupling grating may improve the uniformity of light coupling-out efficiency of the output coupling grating in different areas, thereby improving the homogeneity of display color.

According to an embodiment of the present disclosure, a minor axis width of the output coupling grating gradually increases in the direction away from the input coupling grating.

According to an embodiment of the present disclosure, a major axis length of the output coupling grating gradually decreases in the direction away from the input coupling grating.

According to an embodiment of the present disclosure, at least one of the duty cycle, the minor axis width, or the major axis length of the output coupling grating changes continuously in the direction away from the input coupling grating.

According to an embodiment of the present disclosure, the grating assembly satisfies at least one of the following conditions: the duty cycle of the output coupling grating gradually decreases from A to B in the direction away from the input coupling grating, where A ranges from 0.75 to 0.95 and B ranges from 0.3 to 0.7; the minor axis width of the output coupling grating gradually increases from C to D in the direction away from the input coupling grating, where C ranges from 20 nm to 80 nm and D ranges from 120 nm to 200 nm; or the major axis length of the output coupling grating gradually decreases from E to F in the direction away from the input coupling grating, where E ranges from 300 nm to 400 nm and F ranges from 250 nm to 300 nm.

According to an embodiment of the present disclosure, tooth depth of the output coupling grating gradually increases in the direction away from the input coupling grating.

According to an embodiment of the present disclosure, in the direction away from the input coupling grating, the output coupling grating includes a plurality of output coupling areas, tooth depth of the plurality of output coupling areas gradually increases, and tooth depth of a same output coupling area is the same.

According to an embodiment of the present disclosure, the tooth depth of the output coupling grating gradually increases from G to H in the direction away from the input coupling grating, where G ranges from 20 nm to 100 nm and H ranges from 120 nm to 200 nm.

In another aspect of the present disclosure, the present disclosure provides an optical waveguide assembly. According to an embodiment of the present disclosure, the optical waveguide assembly includes: an optical waveguide; and the grating assembly described above, where the grating assembly is disposed on a side of the optical waveguide. In this way, light intensity distribution of light coupled out of the optical waveguide is relatively uniform, which facilitates improvement in the homogeneity of display color. A person skilled in the art may understand that the optical waveguide has all the features and advantages of the grating assembly described above, and details are not described herein again.

In another aspect of the present disclosure, the present disclosure provides an augmented reality display apparatus. According to an embodiment of the present disclosure, the augmented reality display apparatus includes the optical waveguide described above. In this way, the augmented reality display apparatus has better display color, which facilitates display of a high-performance augmented reality display apparatus.

### BRIEF DESCRIPTION OF THE DRAWINGS

The above and/or additional aspects and advantages of the present disclosure will become apparent and easy to understand from the following description of embodiments taken in conjunction with the drawings, in which:
Fig. 1 is a schematic diagram of arrangement of a grating assembly according to an embodiment of the present disclosure;
Fig. 2 is a schematic plan view and a cross-sectional view of an output coupling grating in Fig. 1;
Fig. 3 is a curve chart of coupling-out efficiency of the output coupling grating for red light R, green light G, and blue light B varying with a minor axis width of the output coupling grating;
Fig. 4 is a curve chart of the coupling-out efficiency of the output coupling grating for the red light R, the green light G, and the blue light B varying with tooth depth of the output coupling grating;
Fig. 5 is a schematic diagram of a duty cycle (CD) gradient of an output coupling grating according to another embodiment of the present disclosure;
Fig. 6 is a schematic diagram of a minor axis width gradient of an output coupling grating according to another embodiment of the present disclosure;
Fig. 7 is a schematic diagram of a major axis length gradient of an output coupling grating according to another embodiment of the present disclosure;
Fig. 8 is a schematic diagram of light intensity distribution of light coupled out by an output coupling grating according to yet another embodiment of the present disclosure and a schematic diagram of light intensity distribution of light coupled out by an output coupling grating in a comparative example;
Fig. 9 is a schematic diagram of tooth depth gradient of a first one-dimensional output coupling grating according to yet another embodiment of the present disclosure;
Fig. 10 is a schematic diagram of tooth depth gradient of a second one-dimensional output coupling grating according to yet another embodiment of the present disclosure;
Fig. 11 is a schematic diagram of tooth depth gradient of a two-dimensional output coupling grating according to yet another embodiment of the present disclosure; and
Fig. 12 is a schematic structural diagram of an optical waveguide assembly according to yet another embodiment of the present disclosure.

### DETAILED DESCRIPTION OF EMBODIMENTS

The following describes the solutions of the present disclosure with reference to embodiments. A person skilled in the art will understand that the following embodiments are merely intended to illustrate the present disclosure and should not be construed as limiting the scope of the present disclosure. If specific technologies or conditions are not specified in the embodiments, the technologies or conditions described in the literature in the art or product specifications are followed.

The following describes the present disclosure with reference to specific embodiments. It should be noted that these embodiments are merely descriptive and do not limit the present disclosure in any manner.

A current grating design generally uses a uniform grating structure, that is, at least one of parameters such as a period, a duty cycle, and tooth depth of a grating is consistent. However, the uniform grating structure means that the coupling-out efficiency of a light beam is the same at different positions of the grating. In the output coupling grating in the optical waveguide, if the coupling-out efficiency of the grating is high, most of light will be coupled out prematurely in first few reflections, which results in extremely uneven light intensity distribution of the coupled-out light. Light energy is extremely strong in a portion close to the input coupling grating and extremely weak in a portion away from the input coupling grating. This phenomenon is particularly obvious for the blue light because of a small diffraction angle and a large number of diffractions of the blue light. If the coupling-out efficiency of the grating is low, light energy cannot be fully utilized, resulting in low final light efficiency. This phenomenon has a greater impact on the red light because of a large diffraction angle and a small number of interactions with the grating of the red light. To solve the technical problem of uneven light coupling-out, the inventors have found through a series of studies that it is possible to control light coupling-out efficiency of different areas by changing the duty cycle of the output coupling grating, thereby improving the homogeneity of light coupling-out of the output coupling grating.

In view ofthis, in an aspect of the present disclosure, the present disclosure provides a grating assembly. The grating assembly includes an input coupling grating and an output coupling grating that are located on a same surface of a substrate and arranged at an interval. According to an embodiment of the present disclosure, a duty cycle (CD) of the output coupling grating gradually decreases in a direction away from the input coupling grating. In this way, in the direction away from the input coupling grating, as the duty cycle gradually decreases, the coupling-out of light by the output coupling grating is gradually enhanced, which may prevent the light from being prematurely coupled out in an area close to the input coupling grating. The output coupling grating has a relatively small duty cycle in an area away from the input coupling grating and thus has relatively high coupling-out efficiency. Therefore, the foregoing arrangement of the output coupling grating may improve the uniformity of light coupling-out efficiency of the output coupling grating in different areas, thereby improving the homogeneity of display color. In addition, the output coupling grating in the present disclosure not only reduces the diffraction efficiency of the blue light in the area close to the input coupling grating, but also improves the diffraction efficiency of the blue light in the area away from the input coupling grating, so as to improve the homogeneity of light coupling-out of blue light. In addition, the output coupling grating also takes into account the improvement of the homogeneity of the diffraction efficiency of the red light and the green light, thereby effectively solving the problem of color homogeneity.

The grating assembly described above includes the input coupling grating and the output coupling grating that are located on the same surface of the substrate and arranged at an interval, that is, the input coupling grating and the output coupling grating are located on a same surface of a same substrate. A person skilled in the art may flexibly select a specific type of the substrate based on a specific application of the grating assembly. For example, the grating assembly is used in some product virtual devices, and both the input coupling grating and the output coupling grating are located on a same surface of an optical waveguide.

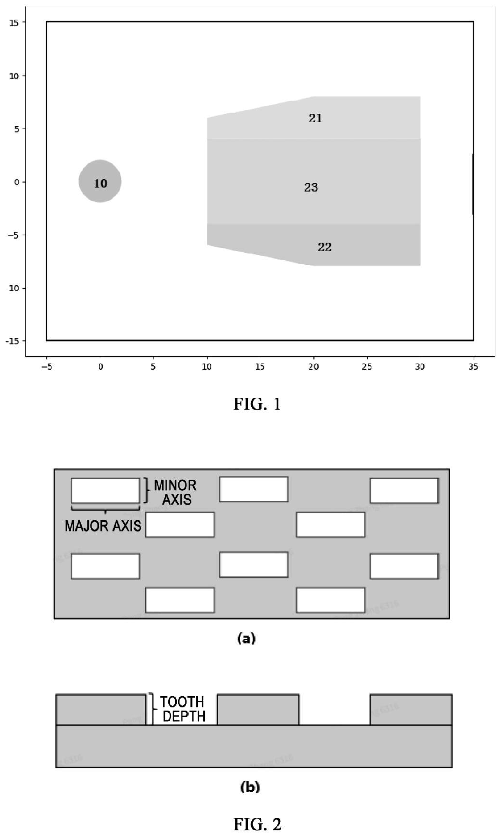

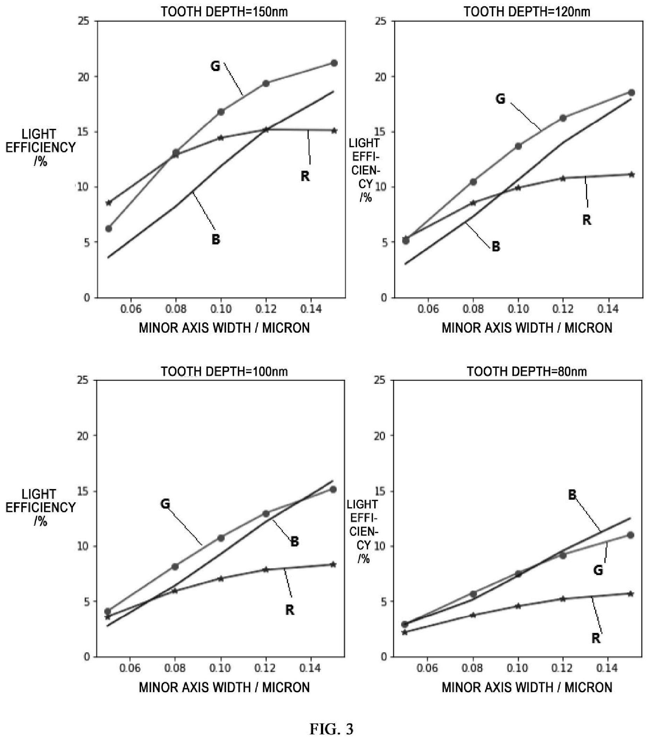

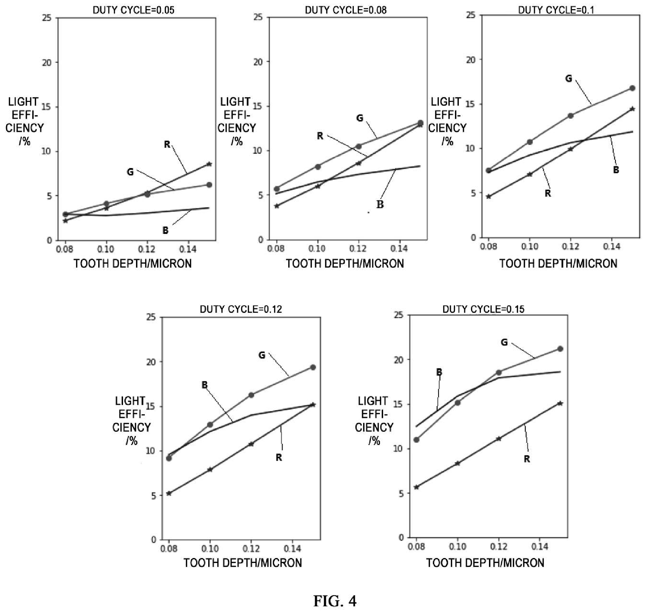

In some embodiments of the present disclosure, the schematic diagrams of arrangement and structure of the grating assembly may be referred to Fig. 1 and Fig. 2. The input coupling grating 10 is disposed on a side of the output coupling grating. The output coupling grating may include three parts: a first one-dimensional output coupling grating 21, a second one-dimensional output coupling grating 22, and a two-dimensional output coupling grating 23 located between the first one-dimensional output coupling grating 21 and the second one-dimensional output coupling grating 22. Grooves of the two-dimensional output coupling grating 23 are arranged in a rectangular array. Simulation tests are performed on coupling-out light efficiency of different color light (including red light R, green light G, and blue light B) for the duty cycle, the groove tooth depth, the groove minor axis size, and the like of the output coupling grating, test results may be referred to Fig. 3 and Fig. 4. It may be learned that the light efficiency of each of the blue light B, the red light R, and the green light G is positively correlated with the minor axis width (the longer the minor axis width, the smaller the duty cycle) and the tooth depth of the output coupling grating. However, change rates of the coupling-out light efficiency of different color light with respect to the minor axis width and the grating tooth depth are different. The diffraction efficiency of the blue light (or the coupling-out light efficiency of the blue light) varies significantly with the minor axis width, but the change for the red light is relatively gentle. When the minor axis width is greater (the duty cycle of the grating is smaller), the coupling-out efficiency of the blue light is greater. When the tooth depth becomes greater, the change in the coupling-out efficiency of the red light is more significant than that of the blue light. Based on the foregoing research theory, in the present disclosure, in addition to improve the homogeneity of the intensity of the light coupled out of the grating by adjusting the duty cycle of the output coupling grating, the present disclosure may further improve the homogeneity of the intensity of the light coupled out of the output coupling grating by adjusting parameters such as the minor axis width or the tooth depth of the output coupling grating. The following describes specific improvement solutions in detail. A person skilled in the art may understand that Fig. 1 and Fig. 2 merely show a case of the structure of the output coupling grating, and the technical solution of the present disclosure may also be applied to output coupling gratings of other structures, that is, Fig. 1 and Fig. 2 are not intended to limit the structure of the output coupling grating in the present application.

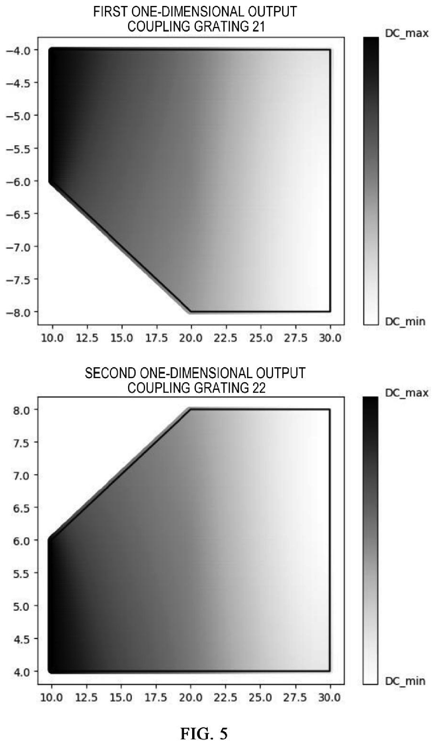

According to an embodiment of the present disclosure, referring to Fig. 5, a duty cycle (CD) of the output coupling grating (Fig. 5 shows changes in the duty cycle of the first one-dimensional output coupling grating 21 and the second one-dimensional output coupling grating 22 in Fig. 1) gradually decreases in a direction away from the input coupling grating (the input coupling grating is not shown in the figure, and its positional relationship with the output coupling grating may be referred to Fig. 1). With the change in the duty cycle of the output coupling grating, the diffraction efficiency of each color light is reduced in the area close to the input coupling grating, and the diffraction efficiency of each color light is improved in the area away from the input coupling grating, so as to improve the homogeneity of light coupling-out of each color light, especially the homogeneity of light coupling-out of blue light, thereby effectively solving the problem of color homogeneity. In some embodiments, as shown in Fig. 5, the duty cycle of the output coupling grating gradually decreases from A (max) to B (min) in the direction away from the input coupling grating, where A ranges from 0.75 to 0.95 (for example, A is 0.75, 0.78, 0.8, 0.85, 0.9, or 0.95), and B ranges from 0.3 to 0.7 (for example, B is 0.3, 0.4, 0.5, 0.06, or 0.7). The output coupling grating within the foregoing range not only has good overall coupling-out efficiency, but also may improve the homogeneity of coupling-out efficiency of different color light at different positions. Meanwhile, in terms of craftsmanship, the output coupling grating with the above-mentioned varying duty cycle is easy to fabricate.

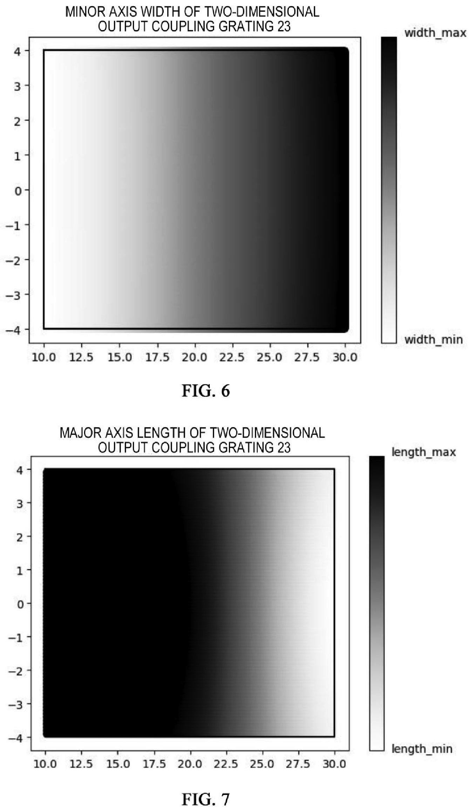

According to an embodiment of the present disclosure, referring to Fig. 6, a minor axis width of the output coupling grating (Fig. 6 shows a change in the minor axis width of the two-dimensional output coupling grating 23 in Fig. 1) gradually increases, that is, the duty cycle gradually decreases, in a direction away from the input coupling grating (the input coupling grating is not shown in the figure, and its positional relationship with the output coupling grating may be referred to Fig. 1). As the minor axis width of the output coupling grating gradually increases, the diffraction efficiency of each color light is reduced in an area close to the input coupling grating, and the diffraction efficiency of each color light is improved in an area away from the input coupling grating, so as to improve the homogeneity of light coupling-out of each color light, especially the homogeneity of light coupling-out of blue light, thereby effectively solving the problem of color homogeneity. In some embodiments, the minor axis width of the output coupling grating gradually increases from C (min) to D (max) in the direction away from the input coupling grating, where C ranges from 20 nm to 80 nm (for example, C is 20 nm, 30 nm, 40 nm, 50 nm, 60 nm, 70 nm, or 80 nm), and D ranges from 120 nm to 200 nm (for example, D is 120 nm, 130 nm, 140 nm, 150 nm, 160 nm, 170 nm, 180 nm, 190 nm, or 200 nm). The output coupling grating within the foregoing range not only has good overall coupling-out efficiency, but also may improve the homogeneity of coupling-out efficiency of different color light at different positions. Meanwhile, in terms of craftsmanship, the output coupling grating with the above-mentioned varying minor axis width is easy to fabricate.

According to an embodiment of the present disclosure, referring to Fig. 7, a major axis length of the output coupling grating (Fig. 7 shows a change in the major axis length of the two-dimensional output coupling grating 23 in Fig. 1) gradually decreases in the direction away from the input coupling grating (the input coupling grating is not shown in the figure, and its positional relationship with the output coupling grating may be referred to Fig. 1). As the major axis length of the output coupling grating gradually decreases, the diffraction efficiency of each color light is reduced in the area close to the input coupling grating, and the diffraction efficiency of each color light is improved in the area away from the input coupling grating, so as to improve the homogeneity of light coupling-out of each color light, especially the homogeneity of light coupling-out of blue light, thereby effectively solving the problem of color homogeneity. In some embodiments, the major axis length of the output coupling grating gradually decreases from E to F in the direction close to the input coupling grating, where E ranges from 300 nm to 400 nm (for example, E is 300 nm, 310 nm, 320 nm, 330 nm, 340 nm, 350 nm, 360 nm, 370 nm, 380 nm, 390 nm, or 400 nm), and F ranges from 250 nm to 300 nm (for example, F is 250 nm, 260 nm, 270 nm, 280 nm, 290 nm, or 300 nm). The output coupling grating within the foregoing range not only has good overall coupling-out efficiency, but also may improve the homogeneity of coupling-out efficiency of different color light at different positions. Meanwhile, in terms of craftsmanship, the output coupling grating with the above mentioned varying major axis length is easy to fabricate.

According to an embodiment of the present disclosure, as shown in Fig. 5 to Fig. 7, at least one of the duty cycle, the minor axis width, or the major axis length of the output coupling grating changes continuously in the direction away from the input coupling grating. The continuous change enables adjustment of the duty cycle, the minor axis width, and the major axis length of the output coupling grating at any different position, so that the light coupling-out efficiency of the output coupling grating for different color light at different positions may be more flexibly adjusted, thereby better improving the homogeneity of the light coupling-out intensity and improving the homogeneity of display color. It should be noted that in actual production, it is difficult to achieve an ideal linear or curvilinear continuous change in terms of the craftsmanship. Therefore, the foregoing "continuous change" in the present disclosure means that the duty cycle, the minor axis width, and the major axis length of the output coupling grating continuously decrease or increase within a change range in the direction away from the input coupling grating, and a difference between two adjacent change values is small, for example, may be controlled within a range of 5 nanometers (for example, the difference is 5 nm, 4 nm, 3 nm, 2 nm, 1 nm, etc.), instead of being kept unchanged within a relatively large area range. For example, taking a change in the minor axis width of the output coupling grating as an example, the change range of the minor axis width of the output coupling grating is 60 nm to 140 nm. In the direction away from the input coupling grating, the minor axis width of the output coupling grating may be 60 nm, 65 nm, 70 nm, 75 nm, 80 nm, 85 nm, 90 nm, 95 nm, 100 nm, 105 nm, 110 nm, 115 nm, 120 nm, 125 nm, 130 nm, 135 nm, and 140 nm in sequence, or the minor axis width of the output coupling grating may be 60 nm, 61 nm, 62 nm, 63 nm, 64 nm, 65 nm, 66 nm, 67 nm, 68 nm, ..., 131 nm, 132 nm, 133 nm, 134 nm, 135 nm, 136 nm, 137 nm, 138 nm, 139 nm, and 140 nm in sequence.

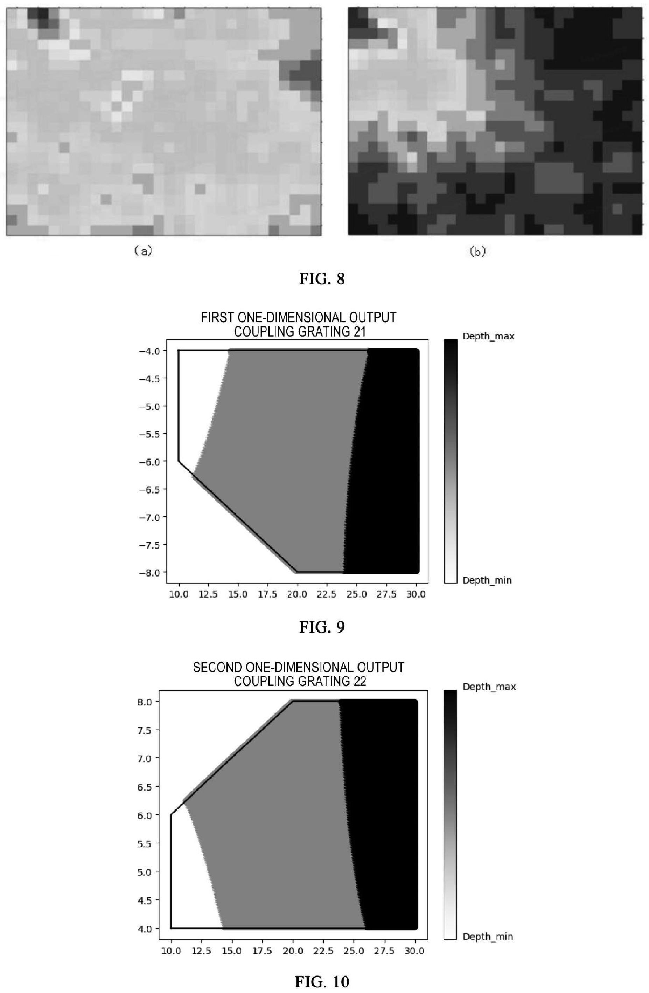

In some specific embodiments, the tooth depth of the output coupling grating is maintained at 90 nm, and the changes in the duty cycle, the minor axis width, the major axis length thereof are shown in Fig. 5 to Fig. 7, and for the schematic diagram of light intensity distribution of light coupled out of the output coupling grating in the eye box at a certain angle, refer to (a) in Fig. 8. In a comparative example, the tooth depth of the output coupling grating is 90 nm, and the duty cycle, the minor axis width, the major axis length thereof remain uniform and unchanged, and for the schematic diagram of light intensity distribution of light coupled out of the output coupling grating in the eye box at a certain angle, refer to (b) in Fig. 8. It may be learned from Fig. 8 that the light intensity distribution of the light coupled out of the improved output coupling grating in the present disclosure is relatively uniform, and the uniformity of optical waveguide display is improved, but the light intensity distribution in the comparative example is extremely uneven.

According to an embodiment of the present disclosure, referring to Fig. 9, Fig. 10, and Fig. 11, tooth depth (Depth) of the output coupling grating (the first one-dimensional output coupling grating 21, the second one-dimensional output coupling grating 22, and the two-dimensional output coupling grating 23 are shown in Fig. 9, Fig. 10, and Fig. 11, respectively) gradually increases in the direction away from the input coupling grating (the input coupling grating is not shown in the figure, and for its positional relationship with the output coupling grating, refer to Fig. 1). As the major axis length and the tooth depth of the output coupling grating gradually increase, the diffraction efficiency of each color light is reduced in the area close to the input coupling grating, and the diffraction efficiency of each color light is improved in the area away from the input coupling grating, so as to improve the homogeneity of light coupling-out of each color light, thereby effectively solving the problem of color homogeneity.

In some embodiments of the present disclosure, the tooth depth of the output coupling grating increases in a stepwise manner in the direction away from the input coupling grating, or the output coupling grating is divided into a plurality of different areas in the direction away from the input coupling grating. The tooth depth of the plurality of different areas gradually increases, but the tooth depth of the output coupling grating portion within each of the areas is the same. In some specific embodiments, as shown in Fig. 9, Fig. 10, and Fig. 11, in the direction away from the input coupling grating, the output coupling grating includes a plurality of output coupling areas S (three output coupling areas S are provided as an example in each of Fig. 9, Fig. 10, and Fig. 11), the tooth depth of the plurality of output coupling areas S gradually increases, and the tooth depth of a same output coupling area is the same. This not only facilitates the fabrication process, but also effectively improves the homogeneity of the intensity of the light coupled out of the output coupling grating. Certainly, a person skilled in the art may understand that in the direction close to the input coupling grating, the output coupling grating includes more output coupling areas S, for example, four output coupling areas S, five output coupling areas S, six output coupling areas S, or eight output coupling areas S.

In some embodiments of the present disclosure, the tooth depth of the output coupling grating gradually increases from G to H in the direction away from the input coupling grating, where G ranges from 20 nm to 100 nm (for example, G is 20 nm, 30 nm, 40 nm, 50 nm, 60 nm, 70 nm, 80 nm, 90 nm, or 100 nm), and H ranges from 120 nm to 200 nm (for example, H is 120 nm, 130 nm, 140 nm, 150 nm, 160 nm, 170 nm, 180 nm, 190 nm, or 200 nm). The output coupling grating within the foregoing range not only has good overall coupling-out efficiency, but also may improve the homogeneity of coupling-out efficiency of different color light at different positions. Meanwhile, in terms of craftsmanship, the output coupling grating with the above-mentioned varying tooth depth is easy to fabricate.

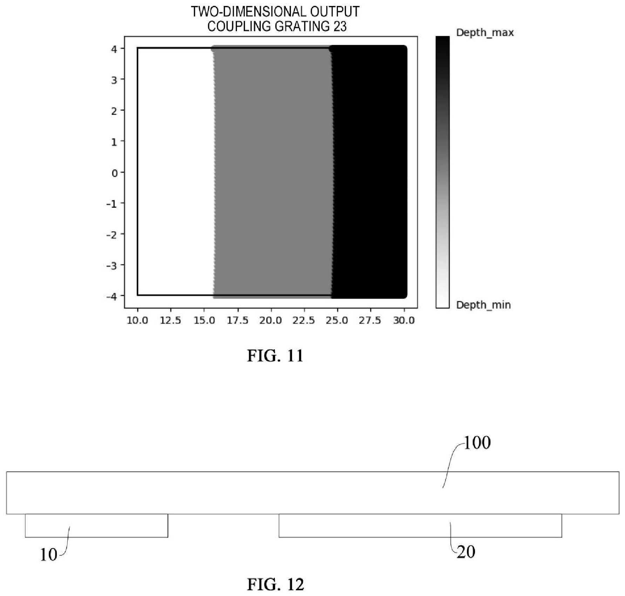

In another aspect of the present disclosure, the present disclosure provides an optical waveguide assembly. According to an embodiment of the present disclosure, referring to Fig. 12, the optical waveguide assembly includes: an optical waveguide 100; and the grating assembly described above, that is, the grating assembly includes the input coupling grating 10 and the output coupling grating 20 described above, and the grating assembly 200 is disposed on a side of the optical waveguide 100. In this way, light intensity distribution of light coupled out of the optical waveguide is relatively uniform, which facilitates improvement in the homogeneity of display color. A person skilled in the art may understand that the optical waveguide has all the features and advantages of the grating assembly described above, and details are not described herein again.

In another aspect of the present disclosure, the present disclosure provides an augmented reality display apparatus. According to an embodiment of the present disclosure, the augmented reality display apparatus includes the optical waveguide assembly described above. In this way, the augmented reality display apparatus has better display color, which facilitates display of a high-performance augmented reality display apparatus. A person skilled in the art may understand that the augmented reality display apparatus has all the features and advantages of the optical waveguide assembly described above, and details are not described herein again.

The terms "first" and "second" in the text are only used for descriptive purposes, and cannot be understood as indicating or implying relative importance or implicitly indicating the number of indicated technical features. Therefore, the features defined as "first" and "second" may explicitly or implicitly include one or more features. In the description of the present application, the meaning of "a plurality of" is two or more, unless explicitly and specifically defined otherwise.

In the description of this specification, the description with reference to the terms such as "an embodiment", "some embodiments", "example", "specific example", or "some examples" means that the specific features, structures, materials, or characteristics described with reference to the embodiment or example are included in at least one embodiment or example of the present disclosure. In this specification, the schematic expressions of the above terms are not necessarily directed to the same embodiment or example. Moreover, the specific features, structures, materials, or characteristics described may be combined in any one or more embodiments or examples in a suitable manner. In addition, without any contradiction, a person skilled in the art may incorporate and combine different embodiments or examples and features of the different embodiments or examples described in this specification.

Although the embodiments of the present disclosure have been shown and described above, it may be understood that the foregoing embodiments are illustrative and cannot be construed as limiting the present disclosure. A person of ordinary skill in the art may make changes, modifications, substitutions, and variations to the foregoing embodiments within the scope of the present disclosure.

## Claims

1. A grating assembly, comprising an input coupling grating and an output coupling grating that are located on a same surface of a substrate and arranged at an interval, wherein a duty cycle of the output coupling grating gradually decreases in a direction away from the input coupling grating.

2. The grating assembly of claim 1, wherein a minor axis width of the output coupling grating gradually increases in the direction away from the input coupling grating.

3. The grating assembly of claim 1, wherein a major axis length of the output coupling grating gradually decreases in the direction away from the input coupling grating.

4. The grating assembly of any of claims 1 to 3, wherein at least one of the duty cycle, the minor axis width, or the major axis length of the output coupling grating changes continuously in the direction away from the input coupling grating.

5. The grating assembly of any of claims 1 to 3, wherein at least one of the following conditions is satisfied:
the duty cycle of the output coupling grating gradually decreases from A to B in the direction away from the input coupling grating, wherein A ranges from 0.75 to 0.95 and B ranges from 0.3 to 0.7;
the minor axis width of the output coupling grating gradually increases from C to D in the direction away from the input coupling grating, wherein C ranges from 20 nm to 80 nm and D ranges from 120 nm to 200 nm; or
the major axis length of the output coupling grating gradually decreases from E to F in the direction away from the input coupling grating, wherein E ranges from 300 nm to 400 nm and F ranges from 250 nm to 300 nm.

6. The grating assembly of any of claims 1 to 3, wherein tooth depth of the output coupling grating gradually increases in the direction away from the input coupling grating.

7. The grating assembly of claim 6, wherein in the direction away from the input coupling grating, the output coupling grating comprises a plurality of output coupling areas, tooth depth of the plurality of output coupling areas gradually increases, and tooth depth of a same output coupling area is the same.

8. The grating assembly of claim 6, wherein the tooth depth of the output coupling grating gradually increases from G to H in the direction away from the input coupling grating, wherein G ranges from 20 nm to 100 nm and H ranges from 120 nm to 200 nm.

9. An optical waveguide assembly, comprising:
an optical waveguide; and
the grating assembly of any of claims 1 to 8, wherein the grating assembly is disposed on a side of the optical waveguide.

10. An augmented reality display apparatus, comprising the optical waveguide assembly of claim 9.
